# EUROPÄISCHE PATENTSCHRIFT

(11) **EP 0 890 384 B1**
(45) Veröffentlichungstag und Bekanntmachung des Hinweises auf die Patenterteilung: **24.03.2004**
(21) Anmeldenummer: 98112252.6
(22) Anmeldetag: 02.07.1998
(51) Int. Cl.: B01D 27/08

(54) **Filterkartusche für Flüssigkeit**
Filter cartridge for liquid
Cartouche de filtre pour liquide

(30) Priorität: 11.07.1997 DE 19729740
(43) Veröffentlichungstag der Anmeldung: 13.01.1999
(73) Patentinhaber: K. & H. Eppensteiner GmbH & Co. KG, 68775 Ketsch (DE)
(72) Erfinder: Schäfer, Theo, 68775 Ketsch (DE)
(74) Vertreter: Sartorius, Peter, Dipl.-Ing.

(56) Entgegenhaltungen:
- EP-A- 0 284 264
- DE-A- 4 023 753
- DE-A- 19 713 091
- US-A- 4 834 885

## Beschreibung

**Die Erfindung bezieht sich auf** einen Filter zum Abtrennen von festen Teilchen aus Flüssigkeiten mit Hilfe von Filtermitteln, die in einem eine Zulaufeinrichtung und eine Ablaufeinrichtung aufweisenden Behälter oder Gehäuse untergebracht sind, der über eine lösbare Verbindung mit dem Gehäuse des Filterteils verbunden und mittels eines Dichtelements abgedichtet ist.

**Es ist bereits ein** Filter zum Abtrennen von festen Teilen aus Flüssigkeit mit Hilfe von Filtermitteln bekannt (DE 40 23 753 C2), die in einem eine Zulaufeinrichtung und eine Ablaufeinrichtung aufweisenden Behälter untergebracht sind. Der Behälter ist über eine lösbare Verbindung mit dem Filteroberteil verbunden. Die Flüssigkeit zum Filter wird mittels eines am Behälter bzw. an einem feststehenden Teil der Filteranlage vorgesehenen Absperrfilters unterbrochen. Der Absperrfilter weist hierzu eine Mitnehmereinrichtung auf. Wird das Gehäuse abgenommen, so wird automatisch der Absperrfilter mit verstellt und schließt dadurch einen Schieber in der Ventilplatte. Nun kann das Gehäuse mit dem fest eingebauten Filter entfernt werden. Da der Filter fest mit dem Gehäuse verbunden ist, lässt sich nur der gesamte Filter entfernen.

Ferner ist ein Filter aus der EP 0 284 264 A2 bekannt, der zum Abtrennen von festen Teilchen aus Flüssigkeiten mit Hilfe von Filterelementen dient. Der zugehörige Gehäuseflansch des Filters weist ein nach oben gerichtetes Formstück auf, an das sich ein nach oben offenes Vertiefungsteil anschließt, wobei das obere Ende des Filtergehäuses um das Formstück zumindest teilweise herumgelegt ist und in ein Vertiefungsteil hineinragt. Das Vertiefungsteil ist hierzu wellenförmig ausgebildet. In diesem Bereich kann kein Dichtelement eingesetzt werden bzw. ist auch kein Dichtelement vorgesehen, das gegen das wellenförmige Teil des oberen Gehäuseflanschteils drückt, um dieses zu sichern. Nach einem weiteren Ausführungsbeispiel in dieser Druckschrift ist der obere Teil des Filtergehäuses aus einem L-förmigen Schenkel gebildet, der hierzu ein vertikal und ein horizontal verlaufendes Schenkelteil aufweist. In diesem Bereich befindet sich ein rechteckförmig ausgebildetes Dichtelement. Diese Ausbildung des oberen Teils des Filterelements ist nicht geeignet, hohe Druckkräfte bzw. Zugkräfte, die beispielsweise bei auftretenden Druckspitzen innerhalb des Filtergehäuses entstehen können, aufzufangen, so dass das Flanschteil sehr leicht aus seiner Vertiefung herausgezogen wird.

Die DE 40 23 753 A1 und die US-PS 4 834 885 zeigen lediglich einfache Dichtelemente, die über den oberen Flansch gegen eine vertikal verlaufende untere Flanschfläche des Filtergehäuses gedrückt werden. Diese Abdichtungssysteme sind nicht geeignet, hohe Druckkräfte des Filters aufzufangen.

Die ältere Patentanmeldung DE 197 13 091 A1 bezieht sich lediglich auf ein Brennstoffeinfüllwerkzeug für einen aufdrehbaren Strömungsmittelfilter, wobei sich der Erfindungsgegenstand unter anderem auf ein rohrförmiges Gehäuse mit einer ringförmigen Umfangswand bezieht, das mit einem offenen und einem geschlossenen Ende ausgestattet ist. Das geschlossene Ende besitzt mittig gelegene Entlüftungsmittel, so dass Luft innerhalb des Filters daraus entweichen kann, wenn das Strömungsmitteleinfüllwerkzeug auf dem Filter positioniert ist.

**Demgegenüber liegt der Erfindung die Aufgabe zugrunde,** den oberen Teil des Filters bzw. des Behälters oder des Flanschteils derart auszubilden und anzuordnen, dass zwischen dem Filtergehäuse und einem Filtergehäuse-Anschlussteil oder einem Filteroberteil eine einwandfreie Abdichtung auch bei auftretenden Druckspitzen aufrechterhalten wird.

**Gelöst wird die Aufgabe durch folgende Merkmale:**
1) die Filtermittel sind in einem Filtergehäuse untergebracht,
2) das Filtergehäuse ist über eine lösbare Verbindung mit einem Filteroberteil verbunden,
3) mit dem Filtergehäuse ist ein Form- und/oder Kraftschlusselement fest oder einteilig verbunden,
4) der Gehäuseflansch weist ein nach oben gerichtetes Formstück auf, an das sich ein nach oben offenes Vertiefungsteil anschließt, wobei das obere Ende des Filtergehäuses um das Formstück herumgelegt und in das Vertiefungsteil eingepasst ist, wobei das Ende des Filtergehäuses bis an die Oberfläche des Gehäuseflanschs reicht oder einen kurzen Abstand zur Oberfläche des Gehäuseflanschs aufweist,
5) die nach oben offene Vertiefung des Filtergehäuses ist als U-förmige Vertiefung ausgebildet, in die ein Dichtelement mittels des Filteroberteils einpressbar ist.

Durch die vorteilhafte Ausbildung des Gehäuseflanschs, der form- oder kraftschlüssig mit dem übrigen Teil des Gehäuses verbunden ist, können auftretende Druckspitzen im Filter aufgefangen werden, da der Teil des Gehäuses das Dichtelement von unten her gegen den oberen Teil, der an das Filtergehäuse angebaut wird, andrückt. Auf diese Weise kann auch bei extremem Druck bzw. bei auftretenden Druckspitzen im Gehäuse des Filters kein Öl nach außen entweichen, da durch den sich im Filtergehäuse aufbauenden Druck ein Teil des Gehäuses des Filters gegen die untere Seite des Dichtelements gedrückt wird und dieser Druck an das Filteroberteil weitergegeben wird. Auftretende Druckspitzen führen gegebenenfalls dazu, dass sich das Gehäuse des Filters etwas nach außen ausbeult, wobei die auftretenden Druck- und Zugkräfte jeweils in günstiger Weise über das Filtergehäuse und das entsprechende, an das Filtergehäuse angeschlossene Formstück gegen das Dichtelement drücken. Vorteilhaft ist es ferner, dass durch Zusammenfügen von Filteroberteil und Platte oder Ventilplatte des Gehäuses die Dichtung und/oder das Vertiefungsteil in ein entsprechendes U-förmiges Vertiefungsteil der Platte hineingedrückt wird.

Bei Druckaufbau im Behälter übt das Formstück der Platte Zugkraft auf eine vertikale Wand aus und drückt die Dichtung gegen die Unterseite der Platte oder eines Teils des Ventiloberteils.

Ferner ist es vorteilhaft, dass der Gehäuseflansch über eine Verbindungseinrichtung, die als Form- und/oder Kraftschlusselement ausgebildet ist, mit der Platte oder einem weiteren Filterteil oder einem Flansch des Filteroberteils verbindbar ist. Da der obere Teil des Gehäuses den Gehäuseflansch oder die Platte oder Ventilplatte formschlüssig umgibt und von unten her zumindest teilweise umgreift, können Zugkräfte, die über den sich im Gehäuse aufbauenden Druck auf die Gehäusewand übertragen werden, sich über die Ventilplatte fortsetzen und von unten her gegen den Dichtring wirken, so dass er dann nach oben gegen den anzubauenden Teil gedrückt wird. Dadurch wird die Anpresskraft zwischen dem Dichtring und dem abzudichtenden Teil weiterhin erhöht.

Eine zusätzliche Möglichkeit ist gemäß einer Weiterbildung der erfindungsgemäßen Vorrichtung, dass die Gesamtbreite der Vertiefung in etwa der Gesamtbreite des Formstücks des Gehäuseflanschs entspricht.

In weiterer Ausgestaltung der Erfindung ist es vorteilhaft, dass die beiden U-förmigen Vertiefungsteile mäanderförmig ausgebildet und einteilig miteinander verbunden sind.

Gemäß einer bevorzugten Ausführungsform der erfindungsgemäßen Lösung ist schließlich vorgesehen, dass das Formstück und das eine U-förmige Vertiefungsteil im Bereich der einen vertikalen Wand des Filtergehäuses vorgesehen sind und an diese angrenzen.

Von besonderer Bedeutung ist für die vorliegende Erfindung, dass die Wand des U-förmigen Vertiefungsteils auch Wandteil des Filtergehäuses ist, der im oberen Bereich schräg verlaufende Wandteile aufweist, die zur Aufnahme des Formstücks dienen.

Im Zusammenhang mit der erfindungsgemäßen Ausbildung und Anordnung ist es von Vorteil, dass der Gehäuseflansch einen zylinderförmigen Stutzen zum Anschluss des vertikal verlaufenden Wandteils des Filtergehäuses zur Aufnahme des Filters aufweist.

Hierzu ist es vorteilhaft, dass die Platte oder Ventilplatte über eine Verbindungseinrichtung, die als Form- und/oder Kraftschlusselement ausgebildet ist, mit der Platte oder einem weiteren Filterteil bzw. einem Flansch des Filteroberteils verbindbar ist.

Weitere Vorteile und Einzelheiten der Erfindung sind in den Patentansprüchen und in der Beschreibung erläutert und in den Figuren dargestellt. In den Figuren ist die Erfindung an einer Ausführungsform beispielsweise dargestellt, ohne auf diese Ausführungsform beschränkt zu sein. Es zeigt:
- Figur 1: die Form- und Kraftschlußverbindung bzw. ein Spannband zur Verbindung von Filtertopf und Filteroberteil im Schnitt,
- Figur 2: eine Teilansicht des Filtertopfs mit der U-förmigen Vertiefung zur Aufnahme des Dichtelements,
- Figur 3: eine schematische Darstellung eines Filteroberteils und eines Filters mit einer Zulaufleitung und einer Abflußleitung.

In der Zeichnung ist mit 2 ein Filter bezeichnet, der zum Abtrennen von festen Teilchen aus Flüssigkeiten mit Hilfe von Filtermitteln bzw. eines Filters 4 dient, der als Papierfilter ausgebildet sein kann und in einem Behälter bzw. Schmutzauffangtopf 10 angeordnet ist.

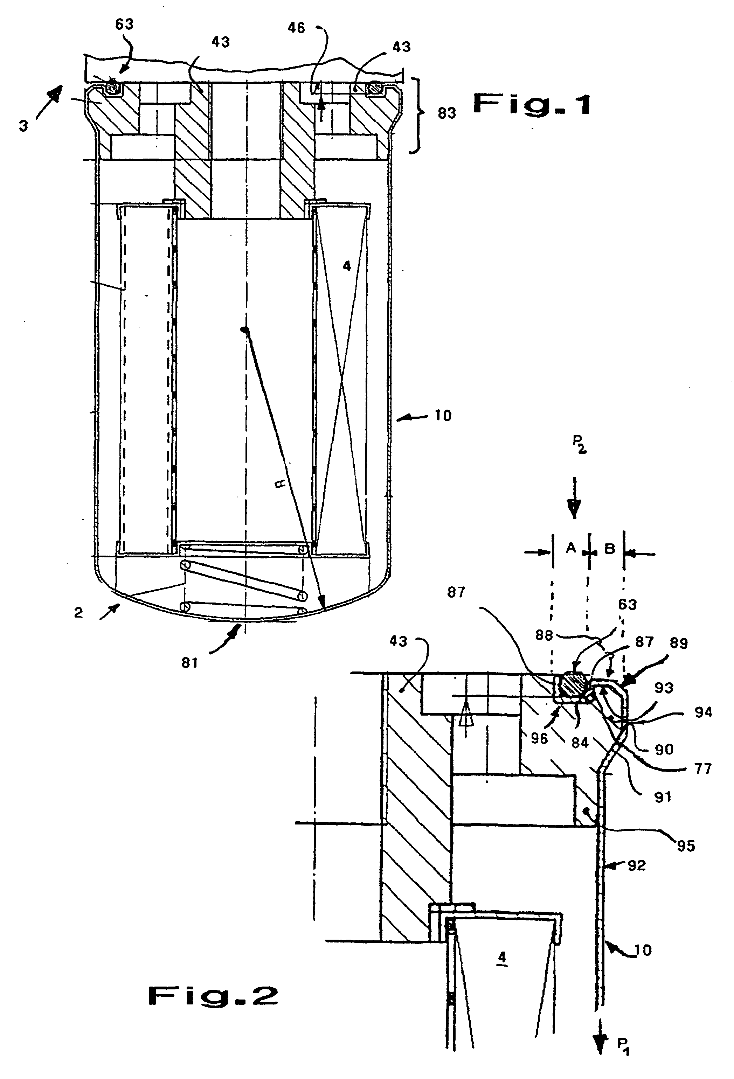

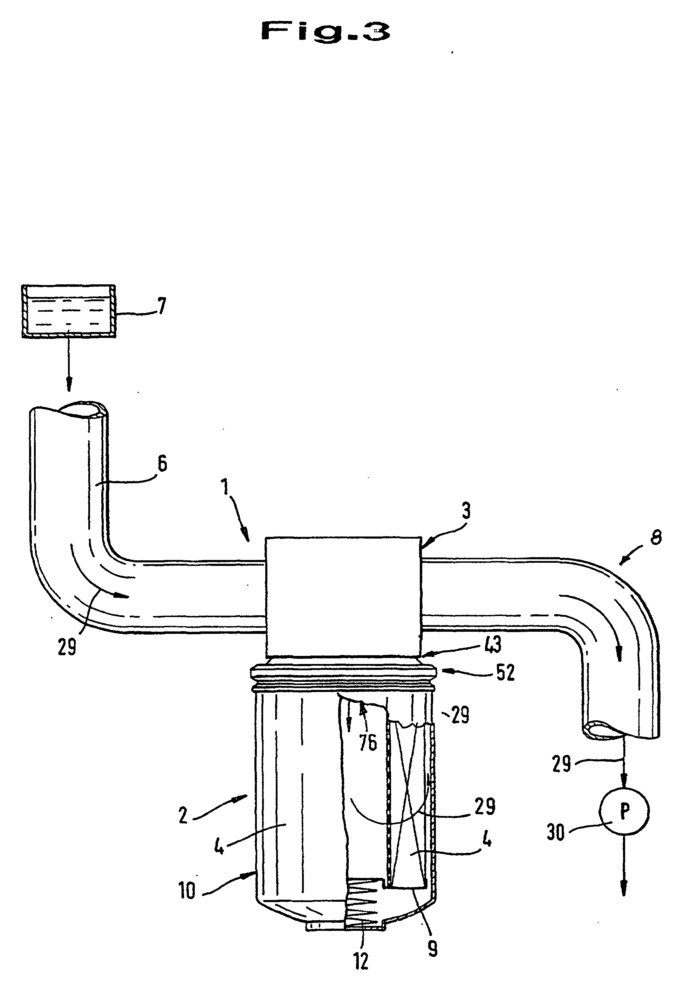

Der Filter 2 weist an seinem Filteroberteil 3 (Figur 3) zum Anschluß einer Zulaufleitung 6 einen Einlaufstutzen 1 auf (Figur 1). Die Zulaufleitung 6 steht mit einem Reservoir 7 in Verbindung, das zur Aufnahme eines Mediums, beispielsweise Öl, dient. Das Reservoir 7 liegt in vorteilhafter Weise etwas höher als das Filteroberteil 3.

Der Filter 2 bzw. das Filteroberteil 3 ist ferner mit einer an einen Anschlußstutzen angeschlossenen Auslaßleitung 8 versehen, über die das Öl in gereinigtem Zustand zu einem in der Zeichnung nicht dargestellten Gerät geleitet wird. Der Verlauf des Öls ist in der Zeichnung durch einen Pfeil 29 schematisch angedeutet.

Zwischen den Filter 2 und das Gerät ist eine Pumpe 30 geschaltet, die dafür sorgt, daß das Öl aus dem Reservoir 7 zu dem Gerät gelangt.

Unterhalb des Filteroberteils 3 befindet sich der Behälter bzw. der Schmutzauffangtopf 10 zur Aufnahme des Filterteils 4. Der Behälter 10 umschließt das Filterteil 4 vollständig. Die Filterteile bzw. Filtereinsätze 4 müssen nach einer bestimmten Betriebszeit entweder gereinigt oder ganz ausgetauscht werden. Hierzu ist der Behälter 10 über ein Formschlußelement und/oder Kraftschlußelement 52 mit dem Filteroberteil 3 lösbar verbunden.

Das Formschlußelement und/oder Kraftschlußelement 52 kann das eigentliche Verbindungselement bzw. die Verbindungseinrichtung darstellen, über die der Behälter bzw. der Filtertopf 10 mit dem Filteroberteil 3 lösbar verbunden wird. Ferner ist es möglich, das Gehäuse 10 über Schraubenbolzen mit dem Filteroberteil 3 zu verbinden.

Hierzu weist einmal der Filtertopf 10 an seinem oberen Ende einen Ringflansch und das Filteroberteil 3 einen gegenüberliegenden, im Durchmesser etwa gleich großen Ringflansch auf. Die beiden Ringflansche können gegeneinander gepreßt werden, um eine dichtende Verbindung zwischen dem Filteroberteil 3 und dem Filtertopf 10 herzustellen.

Um eine Verbindung zwischen Filteroberteil 3 und Filtertopf 10 auf einfache Weise herzustellen, besteht das Kraftschlußelement und/oder Formschlußelement 52 (in Figur 3 nur angedeutet) aus zwei halbkreisförmigen, gelenkig miteinander verbundenen Spannbändern, die einenends ein Gelenk und anderenends ein Schraubverschlußteil aufweisen, über das die beiden Spannbänder lösbar, jedoch im Betriebszustand des Filters fest miteinander verbindbar sind. Das Gelenk besteht aus einem Lenker 73, der endseitig über je einen Gelenkbolzen mit dem entsprechenden Spannband beweglich verbunden ist.

Soll beispielsweise der Filtertopf 10 an das Filteroberteil 3 angeschlossen werden, so werden hierzu die Verbindungseinrichtung oder das Formschlußelement 52 und das Schraubverschlußteil mit ihren beiden Halbschalen bzw. Spannbändern mittels des Gelenks auseinandergeklappt, so daß dann die Verbindungseinrichtung radial auf die beiden gegenüberliegenden Flansche von Filtertopf 10 und Filteroberteil 3 aufgebracht werden kann. Mittels der Schraubverbindung werden die halbkreisförmigen Spannbänder zusammengezogen, so daß sich ihre Flanschflächen gegen die Oberflächen der Ringflansche pressen und diese gegeneinander drücken.

Der Anpreßdruck wird dadurch erhöht, daß das Schraubverschlußteil mit einer Schraube und einer Flügelmutter die beiden Spannbänder zusammenzieht und auf diese Weise die Ringflansche aufeinanderpreßt.

In den Figuren 2 und 3 ist der erfindungsgemäße obere Teil einer Wand 92 des Gehäuses 10 zur Aufnahme des Filters 4 dargestellt.

In Figur 2 ist eine Ventilplatte 43 dargestellt, die mit den Seitenwänden 92 des Gehäuses fest und kraftschlüssig bzw. formschlüssig verbunden ist. Hierzu besteht der obere Teil der Wand 92 aus einem U-förmigen Vertiefungsteil 96, das Bestandteil des Flanschs bzw. der Platte 43 ist. An das U-förmige Vertiefungsteil 96 schließt sich ein Formstück 94 an, das ebenfalls von einem U-förmigen Vertiefungsteil 93 umgeben ist. Das U-förmige Vertiefungsteil 96 ist mit Bezug auf den Filter gemäß Figur 1 nach oben hin offen. In die U-förmige Vertiefung 96 ist ein mit dem Gehäuse 10 fest verbundenes Vertiefungsteil 84 eingeformt, das eine Ringnut bildet, in die eine Dichtung bzw. Ringdichtung 63 einsetzbar ist. Das U-förmige Verbindungsteil 84 wird durch zwei parallel verlaufende, ringförmig ausgebildete Seitenwände 87 gebildet. An die rechte Seitenwand 87 schließt sich ein horizontales Wandteil 88, ein schräg verlaufendes Wandteil 89, ein vertikal verlaufendes Wandteil 90, wiederum ein schräg verlaufendes Wandteil 91 und dann das vertikal verlaufende Wandteil 92 an. All diese beschriebenen Wandteile sind einteilig miteinander verbunden und Bestandteil der Wand des Gehäuses 10. Sie können beispielsweise im Tiefziehverfahren hergestellt werden.

Gemäß Figur 2 verlaufen die beiden U-förmigen Vertiefungen 84 und 93 meanderförmig, d. h. die beiden U-förmigen Teile sind gegeneinander versetzt bzw. einmal nach oben oder nach unten hin geöffnet. Die zweite U-förmige Vertiefung 93 des Filtergehäuses 10 umgibt das Formstück 94, das Bestandteil des Flanschs 43 oder einer Platte 43 ist.

Gegen die Oberfläche der Ringdichtung 63 und die Oberfläche des horizontal verlaufenden Wandteils 88 kann eine weitere Platte angedrückt werden, die beispielsweise zum Filteroberteil 3 gehört. Die beiden Platten werden über das Form- bzw. Kraftschlußelement 52 lösbar miteinander verbunden. Anstelle des Formschlußelements 52 können, wie bereits erwähnt, auch Bolzen oder Schraubenbolzen oder andere Verbindungselemente vorgesehen werden.

Im eingebauten Zustand des Filters 4 gemäß Figur 1 wird das Gehäuse 10 an das Filteroberteil 3 fest angeschlossen. Dabei liegt die Dichtung, wie bereits erwähnt, gegen die Unterseite einer Platte dichtend an.

Wird beispielsweise im Filtergehäuse 10 ein Druck aufgebaut, so drückt das Druckmedium gegen die Unterseite der Platte bzw. Ventilplatte 43 und drückt diese nach oben. Da in vorteilhafter Weise das U-förmige Teil 84 gegen die Unterseite des Dichtrings 63 andrückt, wird bei auftretender Druckspitze die Anpreßkraft zwischen der Oberfläche der Wand der U-förmigen Vertiefung 84 und der Unterseite des Gehäuseoberteils noch verstärkt und die Dichtwirkung nicht verringert, sondern weiterhin erhöht, da auch die Anpreßkraft zwischen dem Dichtring 63 und den Filterelementen vergrößert wird. Selbst wenn sich bei extremen Druckverhältnissen das Gehäuse beispielsweise etwas ausbeulen würde, hat das keine nachteilige Wirkung auf die Dichtung zwischen Gehäuseoberteil 3 und Filtergehäuse 10. Sämtliche Druck- bzw. Zugkräfte, die auf die Wand 92 des Gehäuses 10 einwirken, werden in vorteilhafter Weise gegen die Unterseite des Wandteils der U-förmigen Vertiefung 84 gedrückt. Das horizontal verlaufende Wandteil der Vertiefung 84 ist, wie bereits erwähnt, fest oder einteilig mit dem Wandteil 92 des Gehäuses 10 verbunden. Dadurch können keine Flüssigkeitsmittel nach außen dringen, selbst wenn Kriechströme beispielsweise an einem Stutzen 95 des Flanschs oder der Platte 43 und der Wand 92 entlang fließen würden. Dieses Flüssigkeitsmittel würde auf jeden Fall unter der Unterseite der U-förmigen Vertiefung weitergeführt und könnte nicht nach außen dringen. Leckverluste werden auf diese Weise ausgeschlossen.

In vorteilhafter Weise sind die beiden U-förmigen Vertiefungsteile 84 und 93 im Bereich der Wand 92 des Gehäuses 10 vorgesehen, so daß auch bei auftretenden Zugoder Druckkräften nur geringfügige Biegekräfte auf den Flansch bzw. auf die Platte 43 einwirken.

In vorteilhafter Weise ist der Abstand A bzw. die Breite der U-förmigen Vertiefung 84 in etwa so groß wie die Breite B des Formstücks 94 bzw. der U-förmigen Vertiefung 93 zur Aufnahme des Formstücks 94. Damit gelangt der Dichtring 63 in etwa in eine Lage oberhalb des vertikal verlaufenden Wandteils 92. Auch dies hat einen sehr günstigen Einfluß auf das Dichtverhalten des Gehäuses 10 mit Bezug auf das Filteroberteil 3.

### Bezugszeichenliste

- 1: Einlaufstutzen
- 2: Filter
- 3: Filteroberteil
- 4: Filter, Papierfilter, Filterteil
- 6: Zulaufeinrichtung, Zulaufleitung
- 7: Reservoir
- 8: Ablaufeinrichtung, Auslaßleitung
- 10: Behälter, Schmutzauffangtopf, Filtertopf
- 29: Pfeil
- 30: Pumpe
- 43: Platte, Ventilplatte, Gehäuseflansch
- 46: Flansch, Platte
- 52: Formschlußelement, Kraftschlußelement
- 63: Dichtelement, Ringdichtung
- 73: Lenker
- 81: Gehäuseboden
- 82: Seitenwand
- 83: oberer Teil des Gehäuses 10
- 84: Vertiefung, Vertiefungsteil, Ringnut
- 87: Wandteil, vertikal
- 88: Wandteil, horizontal
- 89: Wandteil, schräg
- 90: Wandteil, vertikal
- 91: Wandteil, schräg
- 92: Wandteil, vertikal
- 93: U-förmige Vertiefung
- 94: ein Teil der Platte 43 oder Formstück
- 95: zylinderförmiger Stutzen, Stutzen von Platte 43
- 96: Vertiefungsteil von Platte 43

## Patentansprüche

1. Filter (2) zum Abtrennen von festen Teilchen aus Flüssigkeiten mit Hilfe von Filtermitteln (4), **mit folgenden Merkmalen:**
1) die Filtermittel (4) sind in einem Filtergehäuse (10) untergebracht,
2) das Filtergehäuse (10) ist über eine lösbare Verbindung mit einem Filteroberteil (3) verbunden,
3) mit dem Filtergehäuse (10) ist ein Formund/oder Kraftschlusselement (83) fest oder einteilig verbunden,
4) der Gehäuseflansch (43) weist ein nach oben gerichtetes Formstück (94) auf, an das sich ein nach oben offenes Vertiefungsteil (96) anschließt, wobei das obere Ende des Filtergehäuses (10) um das Formstück (94) herumgelegt und in das Vertiefungsteil (96) eingepasst ist, wobei das Ende des Filtergehäuses (10) bis an die Oberfläche des Gehäuseflanschs (43) reicht oder einen kurzen Abstand zur Oberfläche des Gehäuseflanschs (43) aufweist,
5) die nach oben offene Vertiefung des Filtergehäuses (10) ist als U-förmige Vertiefung (84) ausgebildet, in die ein Dichtelement (63) mittels des Filteroberteils (3) einpressbar ist.

2. Filter nach Anspruch 1, **dadurch gekennzeichnet, dass** der Gehäuseflansch (43) über eine Verbindungseinrichtung, die als Form- und/oder Kraftschlusselement (52) ausgebildet ist, mit der Platte (46) oder einem weiteren Filterteil oder einem Flansch des Filteroberteils (3) verbindbar ist.

3. Filter nach einem der vorhergehenden Ansprüche, **dadurch gekennzeichnet, dass** die Gesamtbreite (A) der Vertiefung (84, 96) in etwa der Gesamtbreite (B) des Formstücks (94) des Gehäuseflanschs (43) entspricht.

4. Filter nach einem der vorhergehenden Ansprüche, **dadurch gekennzeichnet, dass** die beiden U-förmigen Vertiefungsteile (93, 96) mäanderförmig ausgebildet und einteilig miteinander verbunden sind.

5. Filter nach einem der vorhergehenden Ansprüche, **dadurch gekennzeichnet, dass** das Formstück (94) und das eine U-förmige Vertiefungsteil (93) im Bereich der einen vertikalen Wand (90) des Filtergehäuses (10) vorgesehen sind und an diese angrenzen.

6. Filter nach einem der vorhergehenden Ansprüche, **dadurch gekennzeichnet, dass** die Wand (90) des U-förmigen Vertiefungsteils (93) auch Wandteil des Filtergehäuses (10) ist, der im oberen Bereich schräg verlaufende Wandteile (89, 91) aufweist, die zur Aufnahme des Formstücks (94) dienen.

7. Filter nach Anspruch 1, **dadurch gekennzeichnet, dass** der Gehäuseflansch (43) einen zylinderförmigen Stutzen (95) zum Anschluss des vertikal verlaufenden Wandteils (92) des Filtergehäuses (10) zur Aufnahme des Filters (4) aufweist.

## Claims

1. A filter (2) for separating solid particles from liquids using filter aids (4), **with the following features:**
1) the filter aids (4) are accommodated in a filter housing (10),
2) the filter housing (10) is connected to a filter upper section (3) by means of a detachable connection,
3) a form- and/or force-locking element (83) is connected fixedly or in one part with the filter housing (10),
4) the housing flange (43) has an upwardly directed moulded piece (94) to which is connected an upwardly open recess section (96) wherein the upper end of the filter housing (10) is placed around the moulded piece (94) and is fitted into the recess section (96), wherein the end of the filter housing (10) extends as far as the surface of the housing flange (43) or has a short distance to the surface of the housing flange (43),
5) the upwardly open recess of the filter housing (10) is constructed as a U-shaped recess (84) into which a sealing element (63) can be pressed by means of the filter upper section (3).

2. The filter according to claim 1, **characterised in that** the housing flange (43) can be connected to the plate (46) or another filter section or a flange of the filter upper section (3) by means of a connecting device which is constructed as a form- and/or force-locking element (52).

3. The filter according to any one of the preceding claims, **characterised in that** the total width (A) of the recess (84, 96) approximately corresponds to the total width (B) of the moulded piece (94) of the housing flange (43).

4. The filter according to any one of the preceding claims, **characterised in that** the two U-shaped recess sections (93, 96) are constructed in meander form and are joined together in one piece.

5. The filter according to any one of the preceding claims, **characterised in that** the moulded piece (94) and the one U-shaped recess section (93) are provided in the area of the one vertical wall (90) of the filter housing (10) and are adjacent thereto.

6. The filter according to any one of the preceding claims, **characterised in that** the wall (90) of the U-shaped recess section (93) is also a wall section of the filter housing (10) which has obliquely running wall sections (89, 91) in the upper region which serve to receive the moulded piece (94).

7. The filter according to claim 1, **characterised in that** the housing flange (43) has a cylindrical connecting piece (95) for connecting the vertically running wall section (92) of the filter housing (10) to receive the filter (4).

## Revendications

1. Filtre (2) servant séparer des particules solides de liquides à l'aide de moyens filtrants (4), **présentant les caractéristiques suivantes:**
1) les moyens filtrants (4) sont logés dans un boîtier de filtre (10),
2) le boîtier de filtre (10) est relié par liaison détachable à une partie supérieure de filtre (3),
3) un élément à correspondance géométrique et/ou mécanique (83) est relié fixement ou en une pièce au boîtier de filtre (10),
4) la bride du boîtier (43) présente une pièce moulée orientée vers le haut (94), à laquelle se raccorde une pièce à renfoncement (96) ouverte vers le haut, l'extrémité supérieure du boîtier de filtre (10) étant positionnée autour de la pièce moulée (94) et étant ajustée dans la pièce à renfoncement (96), l'extrémité du boîtier de filtre (10) allant jusqu'à la surface de la bride du boîtier (43) ou se trouvant à faible distance de la surface de la bride du boîtier (43),
5) le renfoncement ouvert vers le haut du boîtier de filtre (10) est réalisé sous forme d'un renfoncement en forme de U (84), dans lequel un élément d'étanchéité (63) peut être enfoncé au moyen de la partie supérieure du filtre (3).

2. Filtre selon la revendication 1, **caractérisé en ce que** la bride du boîtier (43) peut être reliée, par l'intermédiaire d'un dispositif de liaison qui se présente sous forme d'un élément à correspondance géométrique et/ou mécanique (52), à la plaque (46) ou à une autre partie de filtre ou à une bride de la partie supérieure du filtre (3).

3. Filtre selon l'une quelconque des revendications précédentes, **caractérisé en ce que** la largeur totale (A) du renfoncement (84, 96) équivaut approximativement à la largeur totale (B) de la pièce moulée (94) de la bride du boîtier (43).

4. Filtre selon l'une quelconque des revendications précédentes, **caractérisé en ce que** les deux pièces à renfoncement en forme de U (93, 96) ont une conformation sinueuse et sont reliées l'une à l'autre en une pièce.

5. Filtre selon l'une quelconque des revendications précédentes, **caractérisé en ce que** la pièce moulée (94) et la pièce à renfoncement en forme de U (93) sont prévues au niveau d'une paroi verticale (90) du boîtier de filtre (10) et sont adjacentes à celle-ci.

6. Filtre selon l'une quelconque des revendications précédentes, **caractérisé en ce que** la paroi (90) de la pièce à renfoncement en forme de U (93) fait aussi fonction de pièce de paroi du boîtier de filtre (10), qui présente des pièces de paroi (89, 91) s'étendant à l'oblique dans la zone supérieure, qui servent à recevoir la pièce moulée (94).

7. Filtre selon la revendication 1, **caractérisé en ce que** la bride de boîtier (43) présente un raccord de forme cylindrique (95) pour le raccordement de la pièce de paroi (92) s'étendant verticalement du boîtier de filtre (10), et servant à recevoir le filtre (4).
